# EUROPEAN PATENT APPLICATION

(11) **EP 1 441 003 A1**
(43) Date of publication of application: **28.07.2004**
(21) Application number: 04000973.0
(22) Date of filing: 19.01.2004
(51) Int. Cl.: C08K 5/32, C08L 67/06

(54) **Unsaturated polyester resin compositions with improved processing and storage stability**

(30) Priority: 22.01.2003 US 441813 P; 26.11.2003 US 722872
(71) Applicant: Atofina Chemicals, Inc., Philadelphia, PA 19103-3222 (US)
(72) Inventor: Jianfeng, Lou, Wayne, Pennsylvania 19807 (US); Alford, Daniel Jr., Pottstown, Pennsylvania 19464 (US)
(74) Representative: Granet, Pierre

(57) **Abstract**

The present invention relates to a finished resin composition containing (a) an unsaturated polyester, b) a polymerizable monomer, (c) a promoter system, and (d) a composite stabilizer; wherein the composite stabilizer is a hydroxylamine oxide and aromatic antioxidant and, optionally, a hydroxylamine and is present at 0.001-0.5 parts per 100 parts of the finished UPE resin. The stabilizing system improves processing stability by preventing gel-particle formation, improved storage stability of the curing compositions by inhibiting formation of overhead popcorn and suppressing drifts of resin viscosity and gel time.

## Description

### BACKGROUND OF THE INVENTION

### Field of the Invention

This invention relates to unsaturated polyester resin compositions containing a hydroxylamine oxide and, optionally, a hydroxylamine and an aromatic antioxidant, wherein the addition of the hydroxyl amine oxide and the optional components results in an improvement in processing stability and composition, inhibition of an accumulation of undesired overhead polymers, and a decrease in the drift of resin viscosity and gel time.

### Prior Art

In the unsaturated polyester resin (UPE) industry, UPE end users make various finished products such as marbles and gel coats by curing finished resin compositions that contain UPE, cross-linking monomer, promoter and stabilizer.

UPE resins are generally made by an esterification reaction in a heated vessel. Saturated dibasic acids such as phthalic anhydride, isophthalic acid, adipic acid or terephthalic acid or unsaturated dibasic acids such as maleic anyhydride or fumaric acid are reacted with glycols during the esterification reaction. Hydrocarbon modifiers such as dicyclopentadiene (DCPD) and other platicizers may be added during the esterification reaction to impart desired properties to the final UPE resin.

The esterification reaction is usually done at elevated temperatures, from 50°C to greater than 250°C. Such high processing temperatures are necessary to ensure the esterified product remains molten or gel-like as to make it easy to pour from the reaction vessel into another processing vessel.

It is common practice to use an esterification catalyst. Such catalysts produce free radicals that are necessary during the reaction. Catalysts for the esterification reaction include oxidants such as benzoyl peroxide, tertiary butyl hydroperoxide, ditertiary butyl peroxide, and hydrogen peroxide among others.

Processing times for the esterification reaction may be long, often greater than ten hours. For example, UPE resins formulated using maleic acid and polypropylene glycol require from ten to fourteen hours at temperatures from 150° - 250°C. UPE resins formulated using isophthalic acid may require processing times in excess of twenty-three hours at temperatures from 180°C to 230°C.

Once the esterification reaction is completed, the unsaturated polyester resin is transferred to a solution containing reactive monomers such as styrene, methyl methacrylate or vinyl toluene. The reactive monomer solution is necessary to allow for easy processing of the UPE resin. For example, the UPE resin in the absence of the reactive monomer solution is too thick or gelatinous to pour into molds. The same UPE resin in the reactive monomer solution such as styrene is more fluid thus allowing one to pour the UPE resin into a mold.

The reactive monomer solution may be susceptible to spontaneous polymerization when hot UPE resin is added. For example, styrene may spontaneously form polystyrene if the styrene is not stabilized. Typically, commercial styrene is stabilized with dialkylcatechols to slow or completely inhibit polystyrene formation.

With current technology, phenolic compounds such as hydroquinone (HQ), 4-*tert*-butylcatechol (TBC) and 2,6-di-*tert*-butyl-4-methylphenol (BHT) are used as stabilizers in the finished resin compositions to ensure their shelf-life stability.

However, such phenolic stabilizers do not provide vapor-phase popcorn inhibition during storage of the UPE resin and often lead to viscosity and gel time drifts. As such, the storage stability of finished UPE resins, especially those based on dicyclopentadiene (DCPD)-containing UPE resins, presents a great challenge to UPE producers.

Also, phenolic stabilized monomer solutions do not adequately inhibit spontaneous polymerization of the monomer solution. For example, when the hot UPE resin is poured into the monomer solution, the temperature of the monomer solution may rise from about room temperature to greater than 70°C. This elevated temperature increases the propensity for monomer polymerization resulting in un-wanted gel-type particles in the UPE-monomer solution.

There exist numerous publications aiming to improve the resin stability by the use of various stabilizers in UPE curing formulations.

May, C. A.; US Patent # 3,408, 422, 1968 (Shell Oil) discloses hydroxy-containing unsaturated polyester compositions with hydroxylamine compound as stabilizer. Such unsaturated polyester is prepared from a glycidyl polyether of polyhydric phenol and an unsaturated carboxylic acid. The hydroxylamine compound is preferably a dialkylhydroxylamine and is preferably used together with a phenolic compound. These compositions are disclosed as stabilizing against premature gelation, gel-particles, during storage.

Baker, J. G.; Yerty, O. M.; US Patent # 3,775,513, 1973 (PPG Industries) discloses an unsaturated polyester composition comprising 2,4-dinitrophenol as stabilizer. The dinitrophenol stabilizer is used either by itself or together with quinones or hydroquinones. These compositions are disclosed as exhibiting improved storage stability.

Jackson, R. J.; US Patent # 4,293,672, 1981 (Shell Oil) discloses an improved process of esterifying saturated epoxy resins with ethylenically unsaturated monocarboxylic acids. Such a process involves prereacting the epoxy compound with a hydroxylamine compound, which reduces premature gelation during the subsequent esterification reaction.

Jackson, R. J.; US Patent # 4,301,261, 1981 (Shell Oil) discloses an improved process of esterifying saturated epoxy resins with ethylenically unsaturated monocarboxylic acids. Such a process involves prereacting the epoxy compound with a trialkylphosphite, which reduces premature gelation during the subsequent esterification reaction. The preferred trialkylphosphite is triethylphosphite.

Jackson, R. J.; US Patent # 4,303,576, 1981 (Shell Oil) provides an improved process for preparing stabilized polyester compositions. The composition comprises an unsaturated polyester prepared from polyepoxide and unsaturated monocarboxylic acid with an organic phosphine as catalyst, an amine-based stabilizer such as p,p'-dioctyldiphenylamine, and, optionally, a cross-linking monomer such as styrene. The disclosed composition is disclosed to have improved storage stability.

Jackson, R. J.; US Patent # 4,303,579, 1981 (Shell Oil) describes a stable vinyl ester composition that exhibits improved color stability. The composition comprises a vinyl ester prepared from polyepoxide and unsaturated monocarboxylic acid and a stabilizer based on hydroquinone and sterically hindered phenol.

Messick V. B.; US Patent # 4,336,359, 1982 (Dow Chemical) discloses the use of nitric acid to improve the storage stability of vinyl ester resins or unsaturated polyesters without deteriorating their curability. The nitric acid is used by itself or in combination with phenothiazine.

Messick V. B.; US Patent # 4,407,991, 1983 (Dow Chemical) describes the use of oxalic acid to improve the storage stability of vinyl ester resins or unsaturated polyesters without deteriorating their curability. The oxalic acid is used, optionally, in combination with phenothiazine and 4-chloro-2-nitrophenol.

Matsukawa, K.; Hayashiya, T.; Yamamoto, D.; EP Patent # 0,761,737, 1997 (Nippon Shokubai) describes a stabilized resin composition which does not produce gel during storage and has good viscosity stability and little gel time drift. The composition contains at least a dicyclopentadiene (DCPD)-type unsaturated polyester resin, a cross-linking monomer, a phenothiazine derivative, an anion-producing compound, and, optionally, a phosphorous ester.

Typically, resin formulators use multiple stabilizers to exploit synergies. These stabilizers impart to the unsaturated polyester resin formulations reduced gelation and gel time drift.

In addition, efforts have been directed at reducing premature gelation during the esterification reaction where a hydroxylamine or a trialkylphosphite compound is incorporated into the chemical structure of the reactant.

The use of hydroxylamines to reduce gelation has focused on unsaturated polyester resins that are hydroxy-substituted and are prepared from polyepoxides and unsaturated carboxylic acids. In these applications, the hydroxylamine compound is pre-reacted with polyepoxides to reduce gel formation during the subsequent esterification reaction, and it is used together with a phenolic stabilizer in the pre-promoted curing formulation to improve storage stability.

In particular, for curing formulations based on DCPD-containing UPE resins, cobalt soaps are often used in the formulation to facilitate the breakdown of peroxide catalyst. The pre-promoted UPE resins, though stabilized by aromatic antioxidants such as phenols, quinones and phenothiazines, exhibit poor storage stability - undesired polymer formation in overhead space and drift of gel time during storage.

The objective of this invention is to develop a stabilized curing formulation that contains, but is not limited to, a DCPD-containing UPE resin, a polymerizable monomer, a promoter system, and a composite stabilizer. The composition of this invention would exhibit improved processing and storage stability with substantially reduced gel-particle formation, inhibited overhead polymer formation and little gel time drift.

### SUMMARY OF THE INVENTION

The present invention discloses a finished resin composition containing;
a. an unsaturated polyester
b. optionally dicyclopentadiene,
c. a polymerizable monomer,
d. a promoter system, and
e. a composite stabilizer;
wherein the composite stabilizer is a hydroxylamine oxide and optionally a hydroxylamine and an aromatic antioxidant and is present at 0.001-0.5 parts per 100 parts of the finished UPE resin.

### DETAILED DESCRIPTION OF THE INVENTION

In the present invention, a stabilizing system to improve the processing and storage stability of curing compositions based on unsaturated polyester resins or dicyclopentadiene (DCPD)-containing unsaturated polyesters (UPE) is disclosed.

The stabilizing system is based on hydroxylamine oxide and, optionally, a hydroxylamine and aromatic antioxidants. It provides improved processing and storage stability during the thinning of the UPE or UPE-DCPD resins and overhead protection so that undesired polymer is not formed in monomer solution or in the overhead space of the storage container.

The resin composition of the present invention exhibits improved processing and storage stability with inhibited gel-particles formation in the UPE-monomer solution and inhibited formation of overhead popcorn (polymerized monomer) and suppressed drifts of resin viscosity and gel time.

In addition, the disclosed stabilizer gives less gel time and viscosity drifts during storage of pre-promoted DCPC-type UPE resin compositions than do traditional stabilizers, and it imparts to the curing formulation high stability in the absence of air (oxygen) during resin storage.

In the best way known of practicing the present invention, the UPE resin or DCPD-containing UPE resin in the molten state is blended with styrene that is pre-stabilized by aromatic antioxidants and a hydroxylamine oxide and optionally a hydroxylamine.

The operating temperature at the blend tank is controlled below 70°C so that heat-induced evaporation and monomer polymerization could be minimized. The resulting base resin contains 10-40% styrene and is stabilized by 10-500 parts-per-million (ppm) of an alkyl hydroxylamine oxide and alkyl hydroxylamine and 10-500 ppm of aromatic antioxidants such as hindered phenols, quinones and phenothiazines or combinations thereof.

Polymerizable monomers useful in the present invention include styrene and acrylate monomers, which are commonly used in curing formulations. However other monomers may also be employed, for example, vinyl toluene and a-methyl styrene.

Separately, a promoter system is prepared which contains a metallic compound, preferably an inorganic cobalt salt such as cobalt halide or organocobalt compound, used as the primary promoter and an organic amine, used as a co-promoter. Additionally, an optional metallic compound based on salts of copper, manganese, potassium, sodium, vanadium or lithium may be included as a co-promoter. Copper salts are usually used as metallic co-promoter, and alkyl alkanolamines and dialkyl anilines are used as organic co-promoter. In preferred cases, various promoter components are premixed in a solvent such as toluene.

The curing formulation based on UPE or DCPD-containing UPE resin is prepared by incorporating the promoter system into the UPE base resin. In practical applications, the DCPD resin is often blended with other UPE resins that are produced in the absence of hydrocarbon modifiers, for example, ortho-based UPE resins. Thixotopic agents such as fume silica are used in the formulation to modulate its rheological properties. Additional stabilizers or promoters may be used to tune the curing properties of the finished UPE resin formulation. The finished resin formulation, with additional additives and fillers depending on target application, is cured by adding to the final formulation an organic peroxide catalyst, typically, methyl ethyl ketone peroxide, to prepare an end product.

It is preferred that the UPE or DCPD-containing UPE resin is present at 20-90 wt.% of the finished resin.

The stabilizer is present at 0.001-0.5 parts per 100 parts of the finished UPE resin, and it is a composite based on a hydroxylamine oxide and, optionally, a hydroxylamine and aromatic antioxidants.

A composite stabilizer useful in the present invention may be an alkyl amine oxide and optionally a hydroxylamine.

The hydroxylamine oxide compound has the general formula: 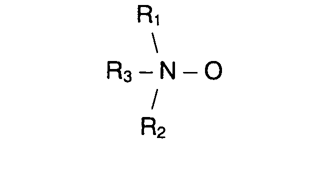 where R₁, R₂ and R₃ are the same or different, and can be hydrogen, alkyl, hydroxyalkyl, alkoxyalkyl, aryl, and sulfonated alkyl groups, they could be cyclic or branched, but they may not all be H.

The hydroxylamine compound has the general formula: 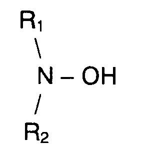 where R₁ and R₂ are the same or different, and can be hydrogen, alkyl, hydroxyalkyl, alkoxyalkyl, aryl, and sulfonated alkyl groups, they could be cyclic or branched, but they may not both be H.

The preferred hydroxylamine oxide compounds are (C₁-C₆) alkyl hydroxylamine oxides such as triethylamine oxide (TEAO) and tributylamine oxide (TBAO).

The preferred hydroxylamine compounds are (C₁-C₆) alkyl hydroxylamines such as diethylhydroxylamine,(DEHA) and dibutylhydroxylamine (DBHA)), N-iso-propylhydroxylamine (NiPHA) and aryl hydroxylamine such as dibenzylhydroxylamine (DBzHA).

In the composite system, hydroxylamine oxide and hydroxylamine is 1-90 wt%, preferably, 40-80 wt%, of the total stabilizer composition, and its level is preferred to be less than 500 ppm based on the curing composition.

The aromatic antioxidant is preferably a hindered phenol, quinone or phenothiazin, even more preferred are 4-*tert*-butylcatechol (TBC), 2,6-di-*tert*-butyl-4-methylphenol (BHT) and phenothiazine. Combinations of antioxidants are also within the scope of this invention.

In the curing formulation, one or more of these hydroxylamine oxides and optionally hydroxylamines and aromatic antioxidants may be used. These hydroxylamine oxide and hydroxylamines and aromatic stabilizers may be introduced to the formulation separately, or they may be premixed prior to their addition. They may be introduced during preparation of the UPE or DCPD-containing UPE base resin, or they may be added after the finished resin is made. Organic solvents such as toluene and unsaturated monomers such as styrene could be used to deliver the stabilizer components.

Additionally, in the curing formulation, many types of additives and fillers are used depending on target product applications.

UPE resins and DCPD-containing UPE resins could vary in chemical constituent and molecular weight; they may be copolymers or polymer blends based on UPE and acrylic polymer. Styrene and acrylate monomers are commonly used in the curing formulation, but other monomers such as vinyl toluene and alpha-methylstyrene may also be employed.

In general, the disclosed resin compositions may be used to manufacture many UPE-based products such as laminates, marine coatings and other general products.

The following examples are illustrative of the invention but are not intended to be exhaustive or to limit the invention to the precise form disclosed. Many other variations and modifications are possible in light of the specification and examples.

The following experiments involve preparation of UPE or DCPD-containing UPE resin formulations where various radical scavengers are used as stabilizer. The resulting resin compositions were stored at room temperature in Amber glass bottles that were checked periodically for the formation of overhead polymer.

The curing process was catalyzed by MEKP, a product of ATOFINA Chemicals, Inc. under the trademark of LUPEROX DDM-9. During the curing experiments, cup gel time and cure time were measured. Gel time is defined as the time from the addition of MEKP until physical gel is observed; cure time is defined as the time from the addition of MEKP until the peak exotherm is produced.

### Example 1

A commercial sample of styrene inhibited with 4-tert-butylcatechol (TBC) was treated to remove the TBC by passing it through a packed column of "inhibitor-remover replacement packing" sold by Aldrich (catalog # 1344-28-1) using a flow rate of 125 ml/hour. To this uninhibited styrene was added 100 milligram per liter (e.g., parts-per-million, ppm) of TBC, diethylhydroxylamine (DEHA) or tributylamine oxide (TBAO).

The uninhibited or artificially inhibited styrene was then evaluated for polystyrene formation by heating 37.6 grams aliquot diluted to 50 grams with toluene in a 250 ml 3-neck flask immersed in an oil bath to 100°C. Samples of the styrene mixture were extracted from the 250 ml and placed in a weighed dish. The weighing dish was then placed in a vacuum oven at 50 to 60°C and 25inches Hg(Vacuum) until all the styrene and solvent had evaporated. The amount of material remaining in the weighing dish represented the conversion of styrene to polystyrene.

| **Elapsed Time** **(HR)** | **Blank Conversion** **(Wt.%)** | **100 ppm TBC Conversion** **(Wt.%)** | **100 ppm DEHA Conversion** **(Wt.%)** | **100 ppm TBAO Conversion** **(Wt.%)** |
|---|---|---|---|---|
| 0.00 | -0.03% | -0.02% | -0.03% | -0.03% |
| 0.50 | 1.73% | 0.67% | 0.62% | 0.30% |
| 1.00 | 3.54% | 2.32% | 2.03% | 0.78% |
| 1.50 | 5.49% | 4.09% | 2.99% | 1.81% |
| 2.00 | 7.13% | 5.76% | 4.13% | 2.76% |
| 2.50 | 8.75% | 7.30% | 4.72% | 3.69% |
| 3.00 | 10.46% | 8.84% | 5.68% | 4.72% |
| 3.50 | 11.98% | 10.17% | 6.30% | 5.56% |
| 4.00 | 13.67% | 11.64% | 7.17% | 6.51% |

The results in the table above clearly show the conversion of styrene to polystyrene is the slowest using TBAO.

### Comparative Example 2

The conversion of styrene to polystyrene was studied in a manner similar to that used in Example 1 but this time using triethylamine oxide (TEAO). The results in the table below shows the polymerization is slowed due to TEAO compared to the commercial stabilizer, TBC.

| **Elapsed Time** **(HR)** | **Blank Conversion** **(Wt.%)** | **100 ppm TBC Conversion** **(Wt.%)** | **100 ppm TEAO Conversion** **(Wt.%)** |
|---|---|---|---|
| 0.00 | -0.03% | -0.03% | 0.00% |
| 0.50 | 1.07% | 0.43% | 0.31% |
| 1.00 | 2.51% | 1.22% | 1.14% |
| 1.50 | 4.05% | 2.74% | 1.83% |
| 2.00 | 5.46% | 4.01% | 2.58% |
| 2.50 | 6.98% | 5.21% | 3.39% |
| 3.00 | 8.32% | 6.17% | 4.28% |
| 3.50 | 9.65% | 7.30% | 5.02% |
| 4.00 | 11.15% | 8.64% | 5.66% |

### Example 3

In this example, TEAO is used to inhibit the formation of gel particles (e.g., spontaneous polymerization of styrene in the thinning vessel) during the thinning step of an unsaturated polyester resin composition. A solid UPE resin is heated to 225°C in an addition funnel and blanketed with nitrogen.

The styrene contained 50 ppm TBC and additional stabilizers such as 1,4-napthoquinone (300 ppm), para-benzoquinone (20 ppm). The styrene solution was cooled using an ethylene glycol cooled blanket and maintained at a temperature of less than 70°C during the addition of the hot UPE resin. To this inhibited styrene solution was added 100 ppm of TEAO.

This molten UPE resin is then let down into a kettle containing inhibited styrene to thin the UPE resin to a desired viscosity.

Samples of the thinned UPE resin were then applied to Leneta paper and a draw down bar was used to form a 1 mil coating of the formulated UPE resin on the Linetta paper. The number of polystyrene particles per square foot formed as a result of pouring the hot UPE resin into the styrene was then examined using a black light source (UV) to examine the black portion of the Leneta Paper.

| **Sample #** | **Description** | **DEHA** | **TEAO** | **Particle Density** **(particles/ft**^{**2**}**)** |
|---|---|---|---|---|
| 12215-30-1 | Control | 0 ppm | 0 ppm | 32 |
| 12215-114-1 | Formulated | 0 ppm | 100 ppm | 16 |

The UPE-styrene solution containing no TEAO resulted in a larger number of unwanted polystyrene particles compared to that containing TEAO.

### Example 4

In this example, the synergy between TEAO and DEHA is demonstrated to inhibit the formation of gel particles (e.g., spontaneous polymerization of styrene in the thinning vessel) during the thinning step of an unsaturated polyester resin composition. A solid UPE resin is heated to 225°C in an addition funnel and blanketed with nitrogen.

The styrene contained 50 ppm TBC and additional stabilizers such as 1,4-napthoquinone (300 ppm), para-benzoquinone (20 ppm). The styrene solution was cooled using an ethylene glycol cooled blanket and maintained at a temperature of less than 70°C during the addition of the hot UPE resin. To this inhibited styrene solution was added 100 ppm of TEAO, 100 ppm of DEHA or 90 ppmDEHA/10ppm TEAO.

This molten UPE resin is then let down into a kettle containing inhibited styrene to thin the UPE resin to a desired viscosity.

Samples of the thinned UPE resin were then applied to Leneta paper and a draw down bar was used to form a 1 mil coating of the formulated UPE resin on the Linetta paper. The number of polystyrene particles per square foot formed as a result of pouring the hot UPE resin into the styrene was then examined using a black light source (UV) to examine the black portion of the Leneta Paper.

| **Sample #** | **Description** | **DEHA** | **TEAO** | **Particle Density** **(Particles/ft**^{**2**}**)** |
|---|---|---|---|---|
| 12215-30-1 | Control | 0 ppm | 0 ppm | 32 |
| 12215-114-1 | Formulated | 0 ppm | 100 ppm | 16 |
| 12215-32-1 | Formulated | 100 ppm | 0 ppm | 8 |
| 12215-114-1 | Formulated | 90 ppm | 10 ppm | 0 |

The combination of TEAO with DEHA completely eliminated gel-particle formation in the styrene.

## Claims

1. A resin composition comprising:
a. an unsaturated polyester
b. a polymerizable monomer,
c. a promoter system, and
d. a composite stabilizer, wherein the composite stabilizer is comprised of (i) a hydroxylamine oxide, and (ii) optionally, a hydroxylamine.

2. The resin composition of claim 1, wherein the promoter system comprises at least a metallic compound as primary promoter and at least an organic amine as co-promoter.

3. The resin composition of claim 1, wherein the composite stabilizer is based on an alkyl hydroxylamine oxide, optionally an alkyl hydroxylamine and an aromatic antioxidant and is present at 0.001-0.5 parts per 100 parts of the finished UPE resin.

4. The resin composition of claim 3, wherein the alkyl hydroxylamine oxide is an (C₁-C₆) alkyl hydroxylamine oxide compound.

5. The resin composition of claim 3, wherein the alkyl hydroxylamine is an (C₁-C₆) alkyl hydroxylamine compound.

6. The resin composition of claim 4, wherein the alkyl hydroxylamine oxide is triethylamine oxide (TEAO) or tributylamine oxide (TBAO) or combinations thereof.

7. The resin composition of claim 5, wherein the alkyl hydroxylamine is diethyl alkylhydroxylamine (DEHA) dibutylhydroxylamine (DBHA)or N-iso-propylhydroxylamine (NiPHA) or combinations thereof.

8. The resin composition of claim 3, wherein aromatic antioxidant is a hindered phenol, quinone or phenothiazine or combinations thereof.

9. The resin of claim 1 wherein dicyclopentadiene is added in the resin mixture.

10. The resin composition of claim 2 that contains a cobalt salt as a primary promoter.

11. The composition of claim 2 wherein the amine is dimethyl aniline or diethyl aniline.

12. The resin composition of claim 1 that contains a peroxide catalyst.

13. The composition of claim 10 that contains a peroxide catalyst with active oxygen content from 0.05% to 50%.

14. An article that is produced from the composition of claim 1 that is a gel-coat, marble or laminate.
